# EUROPÄISCHE PATENTANMELDUNG

(11) **EP 3 239 356 A1**
(43) Veröffentlichungstag der Anmeldung: **01.11.2017**
(21) Anmeldenummer: 16166864.5
(22) Anmeldetag: 25.04.2016
(51) Int. Cl.: C23C 24/02, B32B 5/16, B32B 7/06, B32B 27/14, C04B 35/622, C21D 7/04, B32B 37/24

(54) **HARTSTOFFPARTIKEL ENTHALTENDES ÜBERTRAGUNGSMEDIUM UND VERFAHREN ZUR OBERFLÄCHENMODIFIZIERUNG METALLISCHER FORMKÖRPER HIERMIT**

(71) Anmelder: Evonik Degussa GmbH, 45128 Essen (DE)
(72) Erfinder: LORTZ, Wolfgang, 63607 Wächtersbach (DE); SONDJAJA, Herriyanto Ronny, 64238 Darmstadt (DE); TURHAN, Can Metehan, 64807 Dieburg (DE); FISCHER, Ulrich, 63776 Mömbris (DE); NESS, Daniel, 63450 Hanau (DE); WOMBACHER, Willibald, 63867 Johannesberg (DE); HEBERER, Stefan, 63073 Offenbach (DE)

(57) **Zusammenfassung**

Übertragungsmedium umfassend einen flächigen Träger und eine einseitig darauf aufgebrachte Beschichtung, wobei die Beschichtung Hartstoffpartikel in einem Bindemittel enthält.

Verfahren zur Modifizierung der Oberfläche eines metallischen Formkörpers durch mechanisches Aufbringen von Hartstoffpartikeln auf die Oberfläche des metallischen Formkörpers und/oder Einbringen von Hartstoffpartikeln in die Oberfläche des metallischen Formkörpers, wobei die Mohs-Härte des Hartstoffpartikels höher ist als die des metallischen Formkörpers, bei dem das mechanische Aufbringen und/oder Einbringen der Hartstoffpartikel erfolgt, indem man den metallischen Formkörper mit der beschichteten Seite des Übertragungsmediums in Kontakt bringt und mittels Hämmerns die Hartstoffpartikel auf und/oder in die Oberfläche des metallischen Formkörpers überträgt.

## Beschreibung

Die Erfindung betrifft ein Hartstoffpartikel enthaltendes Übertragungsmedium und ein Verfahren, bei dem die Oberfläche eines metallischen Formkörpers mittels des Übertragungsmediums modifiziert wird.

Kugelstrahlen oder Sandstrahlen sind gängige Methoden um die Materialeigenschaften von metallischen Oberflächen zu verbessern. So kann die die Rauheit der Oberfläche verringert, die Härte erhöht und Spannungen reduziert werden.

Neuerdings wird auch das Aufbringen von Beschichtungen mittels Strahlverfahren beansprucht. In WO2009050251 und WO2008033867 werden Verfahren beschrieben, bei dem man eine Oberfläche mit abrasiven Partikeln ausreichender Energie beschießt um Oberflächenmaterial zu entfernen. Zur gleichen Zeit wird ein Aerosol, welches einen partikulären Dotierungsstoff enthält, an die Oberfläche gebracht. Das Zusammenwirken der abrasiven Partikel und des partikulären Dotierungsstoffes soll zu einer beschichteten Oberfläche führen.

Bei diesen Verfahren nachteilig, dass die Modifikation von Teilen einer Oberfläche oder der Modifikation der Oberfläche eines unregelmäßige geformten Gegenstandes schwierig oder gar unmöglich ist.

Neben Strahlverfahren sind im Stand der Technik auch Hämmerverfahren bekannt, mitten denen auch Teile einer Oberfläche oder ein unregelmäßig geformter Gegenstand modifiziert werden können. Die Oberflächenmodifizierung mittels Hämmerverfahren dient in der Regel zur Glättung von Oberflächen und der Reduzierung von Spannungen.

Über das Ein- und Aufbringen von Partikeln mittels eines Hämmerverfahrens ist im Stand der Technik wenig bekannt. Ripoll et al. berichten in Tribology 8 (2014) 21 vom Einbringen mikroskaliger Wolframcarbidpartikel in Edelstahlproben. Die Wolframcarbidpartikel werden aus einer Mineralöldispersion mittels eines maschinellen Hämmerverfahrens übertragen. Nachteilig an diesem Verfahren ist dessen geringe Effizienz, da ein großer Teil der in der Dispersion vorliegenden Partikel dem Hammer ausweichen. Die Partikel, die übertragen werden, erzeugen eine unerwünschte Oberflächenrauigkeit.

Aufgabe der vorliegenden Erfindung war es daher ein Verfahren bereitzustellen, mit dem Partikel auf eine Oberfläche eines metallischen Gegenstandes aufgebracht werden können, welches die genannten Nachteile des Standes der Technik verringert. Ein weitere Aufgabe der vorliegenden Erfindung ist die Bereitstellung der Mittel, mit denen dieses Verfahren ausführbar ist.

Gegenstand der Erfindung ist ein Übertragungsmedium umfassend einen flächigen Träger und eine einseitig darauf aufgebrachte Beschichtung, wobei die Beschichtung Hartstoffpartikel in einem Bindemittel enthält.

Hartstoffpartikel sind im Rahmen dieser Erfindung solche, deren Mohs-Härte wenigstens 6, in der Regel wenigstens 7, ist. Vorzugsweise werden die Hartstoffpartikel aus der Gruppe bestehend aus Metallen, Metallcarbiden, Metalloxiden und Metallnitriden ausgewählt. Besonders bevorzugt werden die Hartstoffpartikel ausgewählt aus der Gruppe bestehend aus Aluminiumnitrid, Bornitrid, Siliciumnitrid, Titannitrid, Borcarbid, Siliciumcarbid, Tantalcarbid, Titancarbid, Vanadiumcarbid, Wolframcarbid, Aluminiumoxid, Zirkondioxid und Titandioxid. Ganz besonders bevorzugt ist Wolframcarbid.

Der mittlere Partikeldurchmesser der Hartstoffpartikel ist bevorzugt 1 µm oder weniger. Die besten Ergebnisse bei Verwendung in einem Hämmerverfahren werden erhalten, wenn der mittlere Partikeldurchmesser 200 nm oder weniger beträgt. Ganz besonders bevorzugt ist ein Bereich des mittleren Partikeldurchmessers von 40 - 100 nm. Die Hartstoffpartikel können dabei als isolierte Einzelpartikel oder in Form von aggregierten Partikeln vorliegen. Im Falle von aggregierten Partikeln soll sich der angegebene mittlere Durchmesser auf das Aggregat beziehen.

Der flächige Träger wird bevorzugt aus der Gruppe bestehend aus Seide, Nylon, Baumwolle, Polyester, Acrylharzen, Polycarbonatharzen, Polyethylenterephthalat und Mischungen hiervon ausgewählt. Er kann als textiles Flächengebilde, Band oder Folie vorliegen. Die Dicke des flächigen Trägers beträgt in der Regel 5 - 200 µm hat. Bevorzugt ist ein Bereich von 50 - 150 µm.

Das Bindemittel wird bevorzugt aus der Gruppe bestehend aus Celluloseestern, Celluloseethern, Stärke, Vinylpolymeren, Acrylpolymeren, Polyacrylsäure, Polyestern, Polycarbonatpolymeren, Polyamiden, Polyimiden, Epoxypolymeren, Phenolpolymeren, Polyolefinen und Copolymeren hiervon und Mischungen hiervon ausgewählt. Ein besonders bevorzugtes Vinylpolymer ist Polyvinylalkohol.

Der Anteil der Hartstoffpartikel in der Beschichtung ist bevorzugt 50 Gew.-% oder mehr. Besonders bevorzugt ist ein Bereich von 60 - 95 Gew.-%.

Ein weiterer Gegenstand der Erfindung ist ein Verfahren zur Herstellung des Übertragungsmediums, bei dem man
a) eine die Hartstoffpartikel und Lösungsmittel enthaltende Dispersion bereitstellt,
b) aus der Dispersion durch Hinzufügen eines Bindemittels eine Beschichtungszusammensetzung erzeugt,
c) die Beschichtungszusammensetzung auf den flächigen Träger aufbringt und durch
d) Entfernen des Lösungsmittels das Übertragungsmedium erhält.

Die flüssige Phase der Dispersion kann wässerig oder organisch sein. Bevorzugt werden wässerige Dispersionen eingesetzt. Eigenschaften der Dispersion, wie Viskosität oder Stabilität gegenüber Sedimentation, kann beispielsweise durch Änderung des pH-Wertes variiert werden. Hierzu stehen Säuren, Basen und/oder deren Salze zur Verfügung. Als Basen können beispielsweise Ammoniak, Ammoniumhydroxid, Tetramethylammoniumhydroxid, primäre, sekundäre oder tertiäre organische Amine, Monethanolamin, Diethanolamin, Triethanolamin, Monoisopropanolamin, Diisopropanolamin, Triisopropanolamin, N,N-Dimethylisopropanolamin, 3-Amino-1-propanol, 1-Amino-2-propanol und/oder 2-Amino-2-methyl-1-propanol, Natronlauge oder Kalilauge eingesetzt werden. Als Säuren kommen Phosphorsäure, Schwefelsäure, Salzsäure, Salpetersäure oder Carbonsäuren wie Essigsäure, Oxalsäure, Malonsäure, Bernsteinsäure, Glutarsäure, Adipinsäure, Maleinsäure, Fumarsäure, Milchsäure, Äpfelsäure, Weinsäure oder Zitronensäure in Frage.
Zur Herstellung der Dispersion können hochscherende Rotor/Statoraggregate, Hochenergiemühlen oder Ultraschall eingesetzt werden. Der mittlere Partikeldurchmesser der Hartstoffpartikel in der Dispersion ist bevorzugt 1 µm oder weniger, besonders bevorzugt 200 nm oder weniger. Ganz besonders bevorzugt 40 - 100 nm. Die Konzentration der Hartstoffpartikel in der Dispersion beträgt bevorzugt 2 -50 Gew.-%, besonders bevorzugt 5 - 30 Gew.-%.
Die Beschichtungszusammensetzung enthält bevorzugt 0,2 - 10 Gew.-% des Bindemittels.
Das Aufbringen der Beschichtungszusammensetzung auf den flächigen Formkörper kann beispielsweise durch Tauchen, Streichen, Sprühen oder Rakeln erfolgen.
Die Entfernung des Lösungsmittels erfolgt am besten durch Trocken bei 20 - 50°C.

Ein weiterer Gegenstand der Erfindung ist ein Verfahren zur Modifizierung der Oberfläche eines metallischen Formkörpers, etwa von Platten oder gekrümmtem Gegenständen, durch mechanisches Aufbringen von Hartstoffpartikeln auf die Oberfläche des metallischen Formkörpers und/oder Einbringen von Hartstoffpartikeln in die Oberfläche des metallischen Formkörpers, wobei die Mohs-Härte des Hartstoffpartikels höher ist als die des metallischen Formkörpers, bei dem das mechanische Aufbringen und/oder Einbringen der Hartstoffpartikel erfolgt, indem man den metallischen Formkörper mit der beschichteten Seite des erfindungsgemäßen Übertragungsmediums in Kontakt bringt und mittels Hämmerns die Hartstoffpartikel auf und/oder in die Oberfläche des metallischen Formkörpers überträgt. Das Hämmern erfolgt auf der nicht beschichteten Seite des Übertragungsmediums.

Die Hartstoffpartikel werden durch das erfindungsgemäße Verfahren fest mit der Oberfläche verbunden. Die Hartstoffpartikel werden durch eine Ultraschallbehandlung nicht von der Oberfläche abgelöst. Die Einbringtiefe beträgt bis zu 2 µm, in der Regel 0,5 - 1 µm.

Das Metall des metallischen Formkörpers wird bevorzugt aus der Gruppe bestehend aus Eisen, Titan, Aluminium, Nickel, Tantal, Niob, Chrom, Cobalt, Edelmetallen und jeweils Legierungen davon ausgewählt. Besonders bevorzugt ist die eine Eisenlegierung, beispielsweise ein Edelstahl oder ein Werkzeugstahl.

Die Aufprallenergie des Hammers richtet sich nach der Art des metallischen Formkörpers und des Übertragungsmediums. In der Regel wird die Aufprallenergie des Hammers auf das Übertragungsmedium so eingestellt, dass sie 0,1 -50 Joule beträgt. Bevorzugt ist ein Bereich von 1 - 25 J. Die Spitze des Hammers kann eine Hartstoffkugel mit einem Durchmesser von 1 - 10 mm darstellen. Das Hämmern kann so erfolgen, dass nach jedem Hammerschlag eine neue, noch nicht benutzte Position des Übertragungsmediums eingestellt wird. Ebenso kann das Hämmern so erfolgen, dass eine gewählte Position des metallischen Formkörpers ein- oder mehrmals getroffen wird.

Das erfindungsgemäße Verfahren kann so ausgeführt werden, dass die Aufprallenergie des Hammers, die Position des Hammers, die Position des Übertragungsmediums und/oder die Position des metallischen Formkörpers mittels einer Computersoftware gesteuert werden. Vorrichtungen für hierfür sind kommerziell erhältlich (Machine Hammer Peening).

### Beispiele

### Einsatzstoffe

Hartstoffpartikel: AlN (40 nm), TiN (20 nm), Ni (20 nm), Cr (70 nm), WC (200 nm) und TiO₂ (80 nm). In Klammern: mittlerer Partikeldurchmesser.

### Polyvinylalkohol: Poval® PVA235, Kuraray

Übertragungsmedium: Es wird eine 7,5 gewichtsprozentige Dispersion der Hartstoffpartikel in Wasser hergestellt. Zu dieser werden 10 Gew.-% Polyvinylalkohol, bezogen auf die Hartstoffpartikel, aus einer 9 prozentigen, wässrigen Lösung von Polyvinylalkohol, hinzugegeben. Die so hergestellte Beschichtungszusammensetzung wird 5-10 min mit Ultraschall behandelt. Zum Aufbringen auf den flächigen Träger wird ein Ziehrahmen mit einem Spaltmaß von 120 µm verwendet. Die Folie wird bei Raumtemperatur getrocknet.

Flächiger Träger: Polyesterfolie Hostaphan^{®} BN 100 4600A, Mitsubishi, Dicke 100 µm Metallischer Formkörper: Plättchen (10x10x3mm) aus Edelstahl VA 1.4571 oder Werkzeugstahl 1.2842

### Beschichten des metallischen Formkörpers mittels Hämmerverfahren

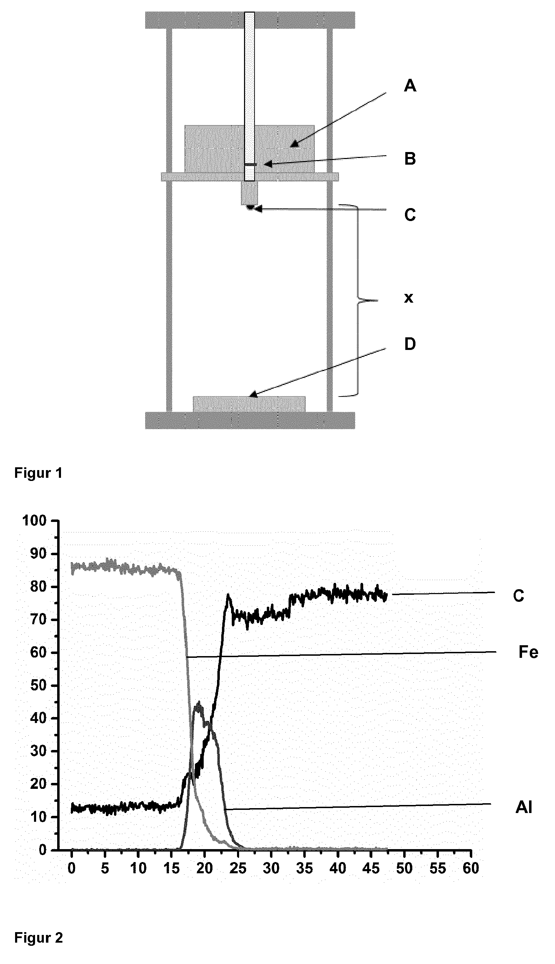

Figur 1 zeigt die zur Durchführung des erfindungsgemäßen Verfahrens eingesetzte Vorrichtung, mit A = Gewicht; B = Feststellung für Fallvorrichtung; C = WC94/Co 6-Kugel (Goodfellow W 6068440, d = 6 mm, Toleranz = ±2,5 µm, poliert, Grad 25, Präzisionskugel; D = Polyesterfolie auf Edelstahlplättchen aufliegend; x = Fallhöhe.

Die Kombination Fallhöhe / Gewicht entspricht einer Aufprallenergie von E1 = g·m·h = 3.5 J (153 mm Höhe und 2,3 kg Gewicht) und E2= 9,1 J (403 mm Höhe und 2,3 kg Gewicht).
Die Wolframcarbid-Kugel wird aus definierter Höhe mit einem Gewicht von 2,3 kg auf das Übertragungsmedium fallen gelassen, welches mit der beschichteten Seite nach unten auf dem Plättchen aus Edelstahl VA 1.4571 oder auf dem Plättchen aus Werkzeugstahl 1.2842 liegt. Anschließend wird das Metallplättchen um 0.2 mm verschoben, das Übertragungsmedium mit einer noch nicht benutzten Stelle über dem Plättchen positioniert und der Vorgang wiederholt. Insgesamt werden so in einer Durchführung 10 Schläge ausgeübt, so dass eine Spur von insgesamt 2 mm erzeugt wird.
Um nur oberflächlich, lose angebundenes Material zu entfernen, wird das Plättchen 5 min im Ulltraschallbad in Ethanol behandelt.

**Tabelle: Beschichtung metallischer Formkörper mit Hartstoffpartikeln**

| Beispiel | Hartstoffpartikel | Metallischer Formkörper | Aufprallenergie [J] |
|---|---|---|---|
| 1 | TiO₂ | Werkzeugstahl | 3,5 |
| 2 | AIN | Werkzeugstahl | 3,5 |
| 3 | TiN | Werkzeugstahl | 3,5 |
| 4 | Cr | Werkzeugstahl | 3,5 |
| 5 | WC | Edelstahl | 9,1 |
| 6 | Ni und Cr | Werkzeugstahl | 3,5 |

### Analytik

Die so bearbeiteten Plättchen werden nun in eine Epoxyharz-Matrix eingebettet.

Die Analyse von Fremdatomen im Werkzeugstahl bzw. Edelstahl erfolgt im Raster-Elektronen-Mikroskop mittels energiedisperser Röntgenspektroskopie. Jede Probe wurde an mindestens drei verschiedenen Stellen mittels eines Linescans untersucht. Hierzu wird ein ca. 60-100 µm langer und 1-2 µm breiter Streifen abgefahren und die Elementverteilung ausgewertet.

Figur 2 (x-Achse = Abstand in µm; y-Achse = Konzentration in Gew.-%) zeigt diese Auswertung für Beispiel 2. In der Vergrößerung des Messsignals für Al sieht man deutlich eine zeitgleiche Abnahme des Eisengehalts. Das Material wird oberflächennah eingebunden, mit einer Tiefe von ca. 0.5 µm.

## Patentansprüche

1. Übertragungsmedium umfassend einen flächigen Träger und eine einseitig darauf aufgebrachte Beschichtung, wobei die Beschichtung Hartstoffpartikel in einem Bindemittel enthält.

2. Übertragungsmedium nach Anspruch 1, **dadurch gekennzeichnet, dass** die Hartstoffpartikel aus der Gruppe bestehend aus Metallen, Metallcarbiden, Metalloxiden und Metallnitriden ausgewählt sind.

3. Übertragungsmedium nach den Ansprüchen 1 oder 2, **dadurch gekennzeichnet, dass** die Hartstoffpartikel einen mittleren Partikeldurchmesser von 1 µm oder weniger aufweisen.

4. Übertragungsmedium nach den Ansprüchen 1 bis 3, **dadurch gekennzeichnet, dass** der flächige Träger aus der Gruppe bestehend aus Seide, Nylon, Baumwolle, Polyester, Acrylharzen, Polycarbonatharzen, Polyethylenterephthalat und Mischungen hiervon ausgewählt ist.

5. Übertragungsmedium nach den Ansprüchen 1 bis 4, **dadurch gekennzeichnet, dass** der flächige Träger ein textiles Flächengebilde, ein Band oder eine Folie ist.

6. Übertragungsmedium nach den Ansprüchen 1 bis 5, **dadurch gekennzeichnet, dass** der flächige Träger eine Dicke von 5 - 200 µm hat.

7. Übertragungsmedium nach den Ansprüchen 1 bis 6, **dadurch gekennzeichnet, dass** das Bindemittel ausgewählt ist aus der Gruppe bestehend aus Celluloseestern, Celluloseethern, Stärke, Vinylpolymeren, Acrylpolymeren, Polyacrylsäure, Polyestern, Polycarbonatpolymeren, Polyamiden, Polyimiden, Epoxypolymeren, Phenolpolymeren, Polyolefinen und Copolymeren hiervon und Mischungen hiervon ausgewählt ist.

8. Übertragungsmedium nach den Ansprüchen 1 bis 7, **dadurch gekennzeichnet, dass** der Anteil der Hartstoffpartikel in der Beschichtung 50 Gew.-% oder mehr beträgt.

9. Verfahren zur Herstellung des Übertragungsmediums nach den Ansprüchen 1 bis 8, **dadurch gekennzeichnet, dass** man
a) eine Hartstoffpartikel und Lösungsmittel enthaltende Dispersion bereitstellt,
b) aus der Dispersion durch Hinzufügen eines Bindemittels eine Beschichtungszusammensetzung erzeugt,
c) die Beschichtungszusammensetzung auf den flächigen Träger aufbringt und durch
d) Entfernen des Lösungsmittels das Übertragungsmedium erhält.

10. Verfahren zur Modifizierung der Oberfläche eines metallischen Formkörpers durch mechanisches Aufbringen von Hartstoffpartikeln auf die Oberfläche des metallischen Formkörpers und/oder Einbringen von Hartstoffpartikeln in die Oberfläche des metallischen Formkörpers, wobei die Mohs-Härte des Hartstoffpartikels höher ist als die des metallischen Formkörpers,
**dadurch gekennzeichnet, dass**
das mechanische Aufbringen und/oder Einbringen der Hartstoffpartikel erfolgt, indem man den metallischen Formkörper mit der beschichteten Seite des Übertragungsmediums gemäß der Ansprüche 1 bis 8 in Kontakt bringt und mittels Hämmerns die Hartstoffpartikel auf und/oder in die Oberfläche des metallischen Formkörpers überträgt.

11. Verfahren nach Anspruch 10, **dadurch gekennzeichnet, dass**
das Metall des metallischen Formkörpers aus der Gruppe bestehend aus Eisen, Titan, Aluminium, Nickel, Tantal, Niob, Chrom, Cobalt, Edelmetalle und jeweils Legierungen davon ausgewählt wird.

12. Verfahren nach den Ansprüchen 10 oder 11, **dadurch gekennzeichnet, dass** die Aufprallenergie des Hammers auf das Übertragungsmedium 0,1 -50 Joule ist.

13. Verfahren nach den Ansprüchen 10 bis 12, **dadurch gekennzeichnet, dass** das Hämmern so erfolgt, dass nach jedem Hämmern eine neue, noch nicht benutzte Position des Übertragungsmediums eingestellt wird.

14. Verfahren nach den Ansprüchen 10 bis 13, **dadurch gekennzeichnet, dass** das Hämmern so erfolgt, dass eine gewählte Position des metallischen Formkörpers ein- oder mehrmals getroffen wird.

15. Verfahren nach den Ansprüchen 10 bis 14, **dadurch gekennzeichnet, dass** die Aufprallenergie des Hammers, die Position des Hammers, die Position des Übertragungsmediums und/oder die Position des metallischen Formkörpers mittels einer Computersoftware gesteuert werden.
